# EUROPÄISCHE PATENTSCHRIFT

(11) **EP 3 693 718 B1**
(45) Veröffentlichungstag und Bekanntmachung des Hinweises auf die Patenterteilung: **04.10.2023**
(21) Anmeldenummer: 20155721.2
(22) Anmeldetag: 05.02.2020
(51) Int. Cl.: G01N 1/22, G01N 1/38, G01N 1/40

(54) **VORRICHTUNG UND VERFAHREN ZUR EXTRAKTIVEN KONTINUIERLICHEN MESSUNG VON PARTIKELN**
APPARATUS AND METHOD FOR THE EXTRACTIVE CONTINUOUS MEASUREMENT OF PARTICLES
DISPOSITIF ET PROCÉDÉ DE MESURE CONTINUE EXTRACTIVE DE PARTICULES

(30) Priorität: 06.02.2019 DE 102019102954
(43) Veröffentlichungstag der Anmeldung: 12.08.2020
(73) Patentinhaber: Dr. Födisch Umweltmesstechnik AG, 04420 Markranstädt (DE)
(72) Erfinder: FÖDISCH, Holger, 04347 Leipzig (DE); SCHULZ, Jörg, 04129 Leipzig (DE)
(74) Vertreter: Hecht, Jan-David

(56) Entgegenhaltungen:
- WO-A1-2015/044256
- DE-A1-102017 108 978
- DE-B3-102017 123 379

## Beschreibung

Die vorliegende Erfindung betrifft eine Vorrichtung zur extraktiven kontinuierlichen Messung von Partikeln nach dem Oberbegriff von Anspruch 1 und ein Verfahren zur extraktiven kontinuierlichen Messung von Partikeln nach dem Oberbegriff von Anspruch 10.

Solche Vorrichtungen und Verfahren werden beispielsweise zur kontinuierlichen Messung von Staubkonzentrationen in Rauchgasen und vor allem in der Industrie eingesetzt. Sie lassen sich allerdings auch für andere gewerbliche und kommunale Einsatzzwecke verwenden.

Vor allem die Entstaubung von Rauch- bzw. Abgas (im Folgenden einheitlich als "Rauchgas" bezeichnet) von Verbrennungsanlagen ist eine alltägliche Aufgabe, insbesondere in der Industrie und im Handwerk. Diese Rauchgasreinigung ist ein kostenintensiver Prozess. Dazu kommen in Abhängigkeit der Größe der Reinigungsanlage Aufwendungen für die notwendige kontinuierliche Überwachung der Entstaubungsanlagen. Für diese kontinuierliche Überwachung erforderlich ist Messtechnik zur Messung der Staubkonzentration, die im Rauchgas enthalten ist.

Bisher erfolgte eine kontinuierliche Bestimmung der Staubkonzentration im Rauchgas durch eine kontinuierliche Entnahme von Rauchgas mittels einer Sonde direkt aus dem Schornstein, in dem der Rauchgasstrom geführt wird, wobei das entnommene Rauchgas einem Sensor zugeführt wird.

Da zahlreiche Bestandteile des oftmals feuchten Rauchgases aggressiv sind und das Rauchgas selbst auch heiß ist, müssen die Sensortechnik und vor allem die Messzelle selbst temperatur- und korrosionsbeständig sein. So enthält Rauchgas aggressive Komponenten wie SO2 und HCl sowie Alkaliverbindungen wie Calcium-, Magnesium- und Zinkchlorid, Kalziumcarbonat und -phosphate, die korrosiv wirken. Insgesamt müssen daher bei der Messung von Partikeln im Rauchgas rauchgasfeste und hitzeunempfindliche und dadurch sehr kostenintensive Sensoren eingesetzt werden. Daher sind solche Vorrichtungen zur Messung von Partikeln in einem korrosiven und/oder heißen Gasstrom bisher sehr teuer. Genauer gesagt kosten derzeit solche zertifizierten Vorrichtungen zwischen 20 TEUR bis 80 TEUR, was einem flächendeckenden Einsatz bisher im Wege steht.

DE102017123379, WO2015044256 und DE102017108978 offenbaren Vorrichtungen zur kontinuierlichen Messung von Partikeln in einem korrosiven und/oder heißen Gasstrom.

Aufgabe der vorliegenden Erfindung ist es daher, eine Vorrichtung und ein Verfahren zur kontinuierlichen Messung von Partikeln in einem korrosiven und/oder heißen Gasstrom bereitzustellen, die wesentlich kostengünstiger sind.

Diese Aufgabe wird gelöst mit der erfindungsgemäßen Vorrichtung nach Anspruch 1 und dem erfindungsgemäßen Verfahren nach Anspruch 10. Vorteilhafte Weiterbildungen sind in den abhängigen Unteransprüchen und der Beschreibung angegeben. Erfinderseits wurde erkannt, dass die gestellte Aufgabe dadurch in überraschender Art und Weise besonders einfach gelöst werden kann, wenn nicht wie bisher das Rauchgas der Sensortechnik und der Messzelle zugeführt wird, sondern nur die zu messenden Partikel, so dass die Sensortechnik und die Messzelle selbst nicht mit dem korrosiven und/oder heißen Gasstrom in Berührung gelangen.

Dadurch kann zur kontinuierlichen Messung sehr kostengünstige Messtechnik verwendet werden, die nicht auf Korrosions- bzw. Hitzebeständigkeit ausgelegt sein muss. Dadurch können die Kosten für die Technik zur kontinuierlichen Überwachung auf ca. 1/10 gesenkt werden. Außerdem besteht ein geringerer Wartungsaufwand, da die korrosions- und wärmebedingte Belastung der Messtechnik sinkt. Den Betreibern von Verbrennungsanlagen steht daher Emissionsmesstechnik in einem günstigeren Preissegment und mit einem geringeren Wartungsaufwand zur Verfügung, so dass ein flächendeckender Einsatz ermöglicht wird.

Die Herausforderung der Entwicklung lag also darin, die notwendigen Messbereiche, hohe Empfindlichkeit und hohe Präzision zu erreichen, ohne dass sich dies auf die avisierten Herstellungskosten und damit den Gerätepreis auswirkt. Dies wurde erfindungsgemäß dadurch erreicht, dass anstelle von industrietauglichen Sensoren, die aufgrund ihrer großen verfügbaren Messbereiche mit Kosten von 3 bis 5 TEUR verbunden sind, nun reine Indoor-Sensoren verwendet werden können, die mit Kosten von nur ca. 30 bis 500 EUR verbunden sind.

Die erfindungsgemäße Vorrichtung zur extraktiven kontinuierlichen Messung von Partikeln in einem korrosiven und/oder heißen Gasstrom, wobei Mittel zur Messung der Partikel bestehen, zeichnet sich somit dadurch aus, dass die Vorrichtung Mittel zur Phasentrennung umfasst, um die Partikel vom Gasstrom zu trennen. Bevorzugt handelt es sich bei dem Gasstrom um einen Rauchgasstrom. Vorzugsweise handelt es sich bei der Messung um eine Konzentrationsbestimmung und bei den Partikeln um Staubpartikel.

In einer vorteilhaften Weiterbildung ist vorgesehen, dass Mittel zur Verdünnung der abgetrennten Partikel bestehen. Dadurch wird zusätzlich zur Verringerung der Aggressivität eine Verminderung der Partikelfracht erreicht, was die Messung mittels alternativer optischer Sensoren aus der Massenfertigung möglich macht, da deren Messbereich im Vergleich zu üblicherweise verwendeten Sensoren niedriger ist. Dadurch sind deutlich geringere Herstellungskosten und niedrigere Gerätepreise für industrietaugliche Staubmesstechnik erzielbar.

In einer vorteilhaften Weiterbildung ist vorgesehen, dass die Mittel zur Verdünnung angepasst sind, eine Verdünnung mit Umgebungsluft und/oder technischer Luft vorzunehmen. "Umgebungsluft" meint Luft, die nicht mit dem Gasstrom in direkter Verbindung steht und keine korrosiven Bestandteile enthält.

Erfindungsgemäß ist vorgesehen, dass Mittel zur Dispergierung, bevorzugt zur Erzeugung eines Aerosols der abgetrennten Partikel in einem Gas bestehen. Dadurch wird eine homogene Verteilung der Partikel erreicht, was eine besonders genaue Messung ermöglicht. Diese Dispergierungsmittel können beispielsweise eine Venturi-Düse aufweisen, bei der die separierten Partikel in einer Treibluft nach dem Injektor-Prinzip mitgenommen werden.

Erfindungsgemäß ist vorgesehen, dass die Mittel zur Phasentrennung strömungsmechanische und/oder elektrische Abscheider, bevorzugt einen Fliehkraftabscheider (Zyklonabscheider) und/oder einen Elektroabscheider und/oder andere trockene Abscheideverfahren, wie Filtration beispielsweise mittels Gewebefiltern umfassen. Damit wird eine Phasentrennung mit 90-95% Wirkungsgrad ermöglicht. Zur Entnahme der separierten Partikel aus dem Fliehkraftabscheider wird bevorzugt eine Zellradschleuse oder zumindest eine rotierende Bürste verwendet, wodurch zugleich der Druckausgleich gewährleistet wird. Die Entnahme aus dem Elektroabschneider könnte beispielsweise durch Klopfen erfolgen, wozu mechanische Klopfer oder piezoelektrisch aktivierte Klopfer verwendet werden könnten.

In einer vorteilhaften Weiterbildung ist vorgesehen, dass die Mittel zur Messung einen nicht korrosions- und/oder nicht temperaturbeständigen Sensor umfassen. Solche Sensoren sind besonders kostengünstig und hoch sensitiv gegenüber Staub, d.h. Messungen im Bereich kleiner 1mg/m³ sind möglich.

In einer vorteilhaften Weiterbildung ist vorgesehen, dass die Mittel zur Messung angepasst sind, die Partikel in der Gasphase zu messen. Die Messung soll also so erfolgen, dass die Partikel in einer gasförmigen Umgebung, insbesondere Luft vorliegen. Dadurch ist keine aufwändige Messsensorik erforderlich, wie es beispielsweise bei der Messung der Partikel in einer wässrigen Lösung oder dgl. flüssiger Umgebung erforderlich wäre.

In einer vorteilhaften Weiterbildung ist vorgesehen, dass die Vorrichtung angepasst ist, die Partikel während der Separation und/oder der Verdünnung und/oder der Dispergierung und/oder der Messung in einem Gasstrom zu halten, bevorzugt die Partikel durchgängig in einem Gasstrom zu halten. Dadurch kann die Vorrichtung konstruktiv sehr einfach und kostengünstig aufgebaut sein. Somit erfolgt insbesondere auch keine Separation der Partikel in Gaswaschflaschen oder dgl. Vorrichtungen, in denen wässrige Phasen eingesetzt werden, und es erfolgt auch keine Verdünnung und/oder Dispergierung der Partikel in wässrigen Phasen.

In einer vorteilhaften Weiterbildung ist vorgesehen, dass die Vorrichtung angepasst ist, die Partikel direkt zu messen. Dadurch wird eine sehr genaue Messung ermöglicht. Insbesondere findet dabei keine Beschichtung der Partikel und/oder keine Bildung von Sekundärpartikeln, die insbesondere größer sind als die ursprünglichen Partikel, und/oder keine Bildung von Partikelverklumpungen statt. Es werden somit auch keine größeren Sekundärpartikel ggf. unter Zuhilfenahme von Beschichtungsmitteln aus den Partikeln erzeugt, um deren Größe zu erhöhen.

In einer vorteilhaften Weiterbildung ist vorgesehen, dass die Mittel zur Messung einen Sensor aufweisen, der obere Messbereichsgrenzen in Bezug auf SO2 von kleiner gleich 1000 µg/m3 und/oder in Bezug auf NO2 von kleiner gleich 1000 µg/m3 und/oder in Bezug auf HCl von kleiner gleich 100 µg/m3 aufweist. Alternativ oder zusätzlich ist es bevorzugt, wenn die obere Messbereichsgrenze des Sensors in Bezug auf die Temperatur kleiner gleich 60°C ist. Solche Sensoren mit solchen geringen oberen Messbereichsgrenzen sind reine Wohnraumsensoren (Indoor-Sensoren), die in der Fertigung besonders günstig sind.

In einer vorteilhaften Weiterbildung ist vorgesehen, dass die Mittel zur Messung einen Sensor aus der Gruppe, optische Sensoren, bevorzugt basierend auf Streulichtmessungen, triboelektrische Sensoren und Sensoren basierend auf der Verstimmung von Quarzschwingern umfassen.

Selbständiger Schutz wird beansprucht für das erfindungsgemäße Verfahren zur extraktiven kontinuierlichen Messung von Partikeln in einem korrosiven und/oder heißen Gasstrom, das sich dadurch auszeichnet, dass die Partikel aus dem Gasstrom abgetrennt und die abgetrennten Partikel bevorzugt nach erneuter Dispergierung in einem nichtkorresiven Medium (z.B. Umgebungsluft) gemessen werden.

In einer vorteilhaften Weiterbildung ist vorgesehen, dass die Abtrennung durch mechanische und/oder elektrische Abscheidung erfolgt, wobei bevorzugt eine Fliehkraftabscheidung und/oder eine Elektroabscheidung verwendet werden.

In einer vorteilhaften Weiterbildung ist vorgesehen, dass die abgetrennten Partikel verdünnt werden und/oder dass aus den abgetrennten Partikeln ein Aerosol gebildet wird.

In einer vorteilhaften Weiterbildung ist vorgesehen, dass das Verfahren die erfi n-dungsgemäße Vorrichtung verwendet.

In einer vorteilhaften Weiterbildung ist vorgesehen, dass die Vorrichtung oder das Verfahren zur kontinuierlichen Messung der Konzentration von Staubpartikeln verwendet wird, insbesondere von Staubpartikeln in Rauchgasen, vorzugsweise industriellen Rauchgasen. Alternativ können aber auch andere kontinuierliche Messungen physikalischer und/oder chemischer Parameter der Partikel vorgenommen werden.

Die Kennzeichen und weitere Vorteile der vorliegenden Erfindung werden im Folgenden anhand der Beschreibung eines bevorzugten Ausführungsbeispiels im Zusammenhang mit der einzigen Figur deutlich werden. Dabei zeigt rein schematisch:
- Fig. 1: eine Vorrichtung und das entsprechende Verfahren nach dem Stand der Technik in einer Blockbilddarstellung,
- Fig. 2: die erfindungsgemäße Vorrichtung und das erfindungsgemäße Verfahren in einer Blockbilddarstellung und
- Fig. 3: die erfindungsgemäße Vorrichtung und das erfindungsgemäße Verfahren in einer beispielhaften schematischen Darstellung.

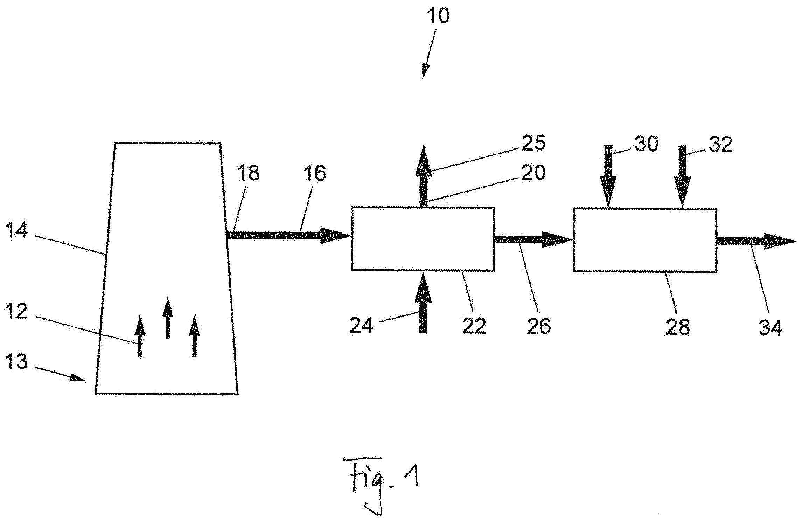

In Fig. 1 ist eine Vorrichtung 10 nach dem Stand der Technik gezeigt, die zur kontinuierlichen Messung der Staubpartikelkonzentration in Rauchgas 12 dient. Dieses Rauchgas 12 stammt aus einer industriellen, handwerklichen oder anderen Verbrennungsanlage 13, die einen Kamin (bzw. Schornstein) 14 aufweist.

Dabei wird kontinuierlich eine repräsentative Probe 16 des Rauchgases 12 aus dem Kamin 14 mittels einer Entnahmesonde 18 extrahiert. Diese Rauchgasprobe 16 wird mittels eines Injektors 20 einer Verdünnungseinheit 22 zugeführt, worin Verdünnungsluft 24 zugeführt wird, um unter Abgabe von Abluft 25 die Konzentration der Staubpartikel herabzusetzen. Die Verdünnungsluft kann dabei entweder technische Luft oder aber auch Umgebungsluft sein.

Nachfolgend wird dieses verdünnte Rauchgas als Messgas 26 direkt einer korrosions- und hitzebeständigen Sensorik 28 zugeführt, um ggf. unter Zuführung von Heizluft 30 (zur Konditionierung in Bezug auf z.B. den Wasser- und H2SO4-Gehalt des Messgases 26) und Spülluft 32 (zur ständigen Reinhaltung der optischen Elemente der Sensorik) die Staubpartikelkonzentration zu bestimmen. Aus der Sensorik 28 tritt dabei kontinuierlich Abluft 34 aus.

Nachteilig an der damit verbundenen starken Verdünnung des Messgases ist es, dass damit ein großer Folgefehler verbunden ist, da die Verdünnung nicht exakt bestimmbar ist.

In manchen Vorrichtungen nach dem Stand der Technik wird daher auf eine solche Verdünnung auch verzichtet, wobei dann die Sensorik einen größeren Messbereich aufweisen muss, was sie noch teurer macht.

Dadurch, dass diese Sensorik 28 korrosions- und hitzebeständig sein muss, ist eine solche Messvorrichtung 10 nach dem Stand der Technik sehr teuer.

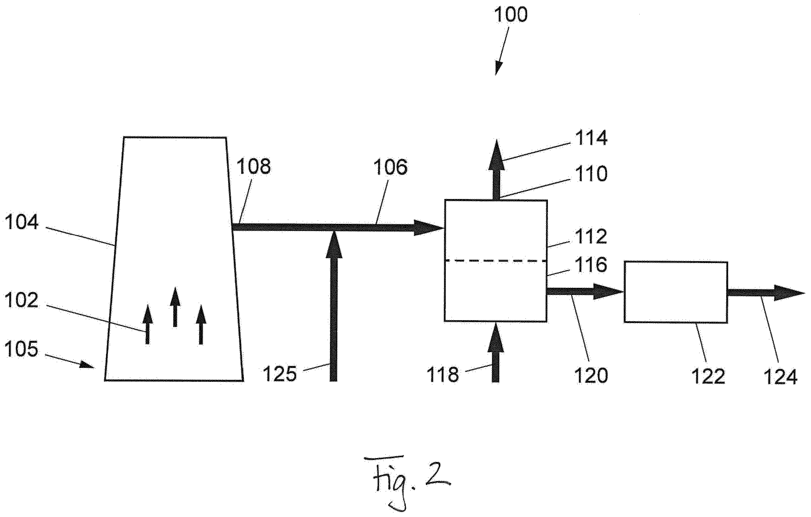

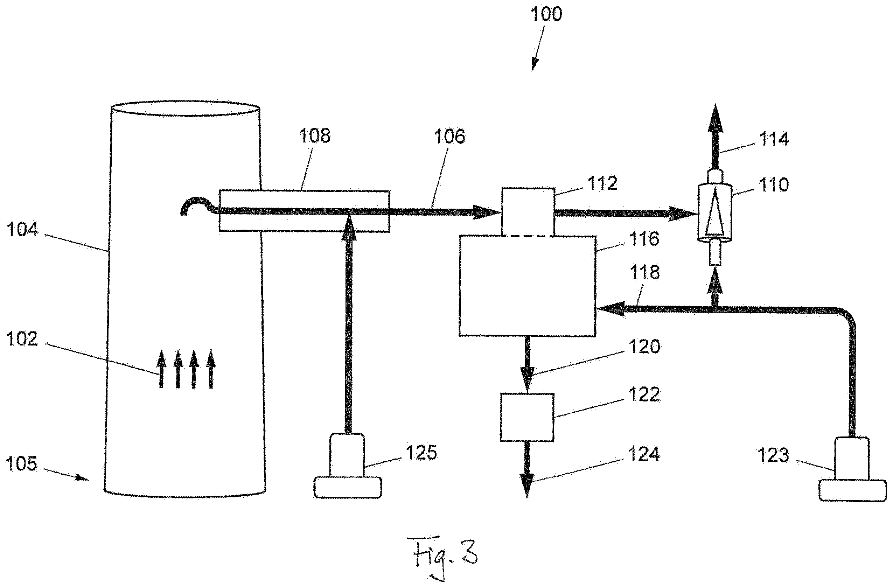

Stattdessen wird in der in den Fig. 2 und 3 gezeigten erfindungsgemäßen Vorrichtung 100 zur extraktiven kontinuierlichen Messung der Staubpartikelkonzentration in Rauchgas 102, das einem Kamin 104 einer Verbrennungsanlage 105 als repräsentative Probe 106 mittels einer Entnahmesonde 108 kontinuierlichen entnommen wird, die Rauchgasprobe 106 nun mit dem Injektor 110 einer Separation 112 zugeführt, die die Staubpartikel des Rauchgases 102 von der übrigen Abluft 114 abtrennt.

Dadurch wird zum einen die Hitze und Feuchte des Rauchgases 102 beseitigt und zum anderen auch die korrosiven Bestandteile, wie SO2, HCl sowie Calcium-, Magnesium- und Zinkchlorid, Kalziumcarbonat und -phosphate des Rauchgases 102 entfernt. Dadurch erfolgt eine Phasentrennung in die eigentlichen zu untersuchenden Staubpartikel (feste Phase) und die schädlichen, nämlich hochtemperaturigen und/oder korrosiven Bestandteile des Rauchgases (fluide Phase), die als Abluft 114 ausgesondert werden.

Eine solche Separation kann beispielsweise mittels eines Fliehkraftabscheiders, der auch als Zyklonabscheider bekannt ist, einfach strömungsmechanisch erfolgen. Die Entnahme der separierten Partikel kann dann beispielsweise einfach mittels einer Zellradschleuse erfolgen oder durch zumindest eine rotierende Bürste.

Die separierten Staubpartikel werden dann einer Dispergiereinheit 116 zugeführt, worin mithilfe von Verdünnungsluft 118, die wiederum technische Luft oder Umgebungsluft sein kann, die Staubpartikel verdünnt und ein Aerosol 120 gebildet wird. Die Dispergiereinheit 116 könnte beispielsweise durch eine Venturi-Düse gebildet werden, durch die eine annähernd vollständige Mitnahme der Partikel aus der Phasentrennung erfolgt.

Das gebildete Aerosol 120 wird dann als Messgas der Sensorik 122 zugeführt und die Staubkonzentration bestimmt. Aus der Sensorik 122 tritt dabei kontinuierlich Abluft 124 aus.

Die Verdünnungsluft 118 stammt aus einer Treibluftquelle 123, die nicht nur die Dispergiereinheit 116 speist, sondern auch den Injektor 110 antreibt (vgl. Fig. 3). Außerdem könnte auch eine Verdünnung 125 des Rauchgases 106 beispielsweise in der Entnahmesonde 108 erfolgen, ist allerdings nicht zwingend notwendig.

Im Rahmen der erfindungsgemäßen Vorrichtung 100 kann auf die gesonderte Zuführung von Heiz- und Spülluft verzichtet werden, weil die Konditionierung schon durch die Separation erfolgt. Die Verwendung von Spülluft zur Reinhaltung der optischen Elemente des Sensors ist möglich, allerdings aufgrund der geringen Konzentration nicht zwingend nötig.

Da das Aerosol 120 nahezu keine "aggressiven", also hochtemperaturigen und korrosiven Bestandteile mehr enthält, kann anstelle der gemäß Stand der Technik nach Fig. 1 verwendeten kostenintensiven Sensorik 28 mit hitze- und korrosionsunempfindlichen Bauteilen eine alternative Sensorik 122 zum Einsatz kommen, die gegen Hitze und Korrosion nicht unempfindlich ist. Dadurch ist die Messung sehr kostengünstig aber dennoch sehr genau möglich, was noch zusätzlich durch die Homogenisierung verbessert wird. Die Sensorik 122 kann dabei beispielsweise auf Infrarot-LED-Technik basieren, wie sie bisher nur im Umgebungsluftbereich (ambient air) zum Einsatz kam. Diese Sensorik benötigt nur einen anwendbaren Temperaturbereich von 0°C bis 60°C.

Im Rahmen der erfindungsgemäßen Vorrichtung 100 werden stets die Partikel selbst gehandhabt und vermessen, ohne dass Sekundärpartikel ggf. unter Hinzunahme von Beschichtungsmitteln erzeugt werden. Außerdem erfolgt die Handhabung der Partikel durchgängig in der Gasphase, es wird also insbesondere keine Separation in einer wässrigen Lösung, beispielsweise einer Gaswaschflasche, vorgenommen.

Aus der vorstehenden Darstellung ist deutlich geworden, dass mit der vorliegenden Erfindung eine Messvorrichtung 100 bereitgestellt wird, die zur kontinuierlichen Messung von Partikeln in einem korrosiven und/oder heißen Gasstrom dient und wesentlich kostengünstiger ist als bisherige Vorrichtungen. Außerdem besteht ein geringerer Wartungsaufwand, da die korrosions- und wärmebedingte Belastung der Messtechnik sinkt. Den Betreibern von Verbrennungsanlagen steht daher Emissionsmesstechnik in einem günstigeren Preissegment, auch bei sehr geringen Staubkonzentrationen (<1mg/m³) und mit einem geringeren Wartungsaufwand zur Verfügung, so dass ein flächendeckender Einsatz ermöglicht wird.

### Bezugszeichenliste

- 10: Vorrichtung nach dem Stand der Technik zur Messung der Staubpartikelkonzentration
- 12: Rauchgas
- 13: Verbrennungsanlage
- 14: Kamin, Schornstein
- 16: repräsentative Probe des Rauchgases 12
- 18: Entnahmesonde
- 20: Injektor
- 22: Verdünnungseinheit
- 24: Verdünnungsluft
- 25: Abluft
- 26: Messgas, verdünnte Rauchgas
- 28: korrosions- und hitzebeständige Sensorik, Mittel zur Messung
- 30: Heizluft
- 32: Spülluft
- 34: Abluft
- 100: erfindungsgemäße Vorrichtung zur Messung der Staubpartikelkonzentration
- 102: Rauchgas
- 104: Kamin, Schornstein
- 105: Verbrennungsanlage
- 106: repräsentative Probe des Rauchgases 102
- 108: Entnahmesonde
- 110: Injektor
- 112: Separation, Fliehkraftabscheider, Zyklonabscheider, Mittel zur Phasentrennung
- 114: Abluft
- 116: Dispergiereinheit, Dispergiermittel
- 118: Verdünnungsluft zur Dispergierung, Umgebungsluft
- 120: Aerosol, Messgas
- 122: Sensorik, Mittel zur Messung
- 123: Treibluft
- 124: Abluft
- 125: Verdünnung des Rauchgases 106

## Patentansprüche

1. Vorrichtung (100) zur kontinuierlichen Messung von Partikeln in einem korrosiven und/oder heißen Gasstrom (102), wobei Mittel (122) zur Messung der Partikel bestehen, **dadurch gekennzeichnet, dass** die Vorrichtung Mittel (112) zur Phasentrennung umfasst, die strömungsmechanische und/oder elektrische Abscheider umfassen, um die Partikel vom Gasstrom (102) zu trennen, wobei Mittel zur Dispergierung der abgetrennten Partikel in Luft, die nicht mit dem Gaststrom (102) in direkter Verbindung steht und keine korrosiven Bestandteile aufweist, bestehen, so dass die Mittel zur Messung nicht mit dem korrosiven und/oder heißen Gasstrom (102) in Berührung gelangen, sondern nur mit den zu messenden abgetrennten Partikeln.

2. Vorrichtung (100) nach Anspruch 1, **dadurch gekennzeichnet, dass** die Mittel (112) zur Phasentrennung einen Fliehkraftabscheider und/oder einen Elektroabscheider umfassen.

3. Vorrichtung (100) nach Anspruch 1 oder 2, **dadurch gekennzeichnet, dass** Mittel zur Verdünnung der abgetrennten Partikel bestehen, wobei die Mittel zur Verdünnung bevorzugt angepasst sind, eine Verdünnung mit Umgebungsluft und/oder technischer Luft vorzunehmen.

4. Vorrichtung (100) nach einem der vorherigen Ansprüche, **dadurch gekennzeichnet, dass** die Mittel zur Dispergierung zur Erzeugung eines Aerosols (120) der abgetrennten Partikel in einem Gas bestehen.

5. Vorrichtung (100) nach einem der vorherigen Ansprüche, **dadurch gekennzeichnet, dass** die Mittel (122) zur Messung angepasst sind, die Partikel in der Gasphase zu messen.

6. Vorrichtung (100) nach einem der vorherigen Ansprüche, **dadurch gekennzeichnet, dass** die Vorrichtung (100) angepasst ist, die Partikel während der Separation und/oder der Verdünnung und/oder der Dispergierung und/oder der Messung in einem Gasstrom zu halten, bevorzugt die Partikel durchgängig in einem Gasstrom zu halten.

7. Vorrichtung (100) nach einem der vorherigen Ansprüche, **dadurch gekennzeichnet, dass** die Vorrichtung (100) angepasst ist, die Partikel direkt zu messen.

8. Vorrichtung (100) nach einem der vorherigen Ansprüche, **dadurch gekennzeichnet, dass** die Mittel (122) zur Messung einen nicht korrosions- und/oder nicht temperaturbeständigen Sensor umfassen.

9. Vorrichtung (100) nach einem der vorherigen Ansprüche, **dadurch gekennzeichnet, dass** die Mittel (122) zur Messung einen optischen Sensor, bevorzugt basierend auf einer Streulichtmessung, umfassen.

10. Verfahren zur kontinuierlichen Messung von Partikeln in einem korrosiven und/oder heißen Gasstrom (102), **dadurch gekennzeichnet, dass** die Partikel aus dem Gasstrom (102) abgetrennt, wobei die Abtrennung durch mechanische und/oder elektrische Abscheidung (112) erfolgt, und die abgetrennten Partikel gemessen werden, wobei die abgetrennten Partikel in Luft, die nicht mit dem Gaststrom (102) in direkter Verbindung steht und keine korrosiven Bestandteile aufweist, dispergiert werden, so dass die zur kontinuierlichen Messung der abgetrennten Partikel bestimmten Mittel zur Messung nicht mit dem korrosiven und/oder heißen Gasstrom (102) in Berührung gelangen, sondern nur mit den zu messenden abgetrennten Partikeln.

11. Verfahren nach Anspruch 10, **dadurch gekennzeichnet, dass** für die Abtrennung durch mechanische und/oder elektrische Abscheidung (112) eine Fliehkraftabscheidung und/oder eine Elektroabscheidung verwendet werden.

12. Verfahren nach Anspruch 10 oder 11, **dadurch gekennzeichnet, dass** die abgetrennten Partikel verdünnt werden und/oder dass aus den abgetrennten Partikeln ein Aerosol (120) gebildet wird.

13. Verfahren nach einem der Ansprüche 10 bis 12, **dadurch gekennzeichnet, dass** das Verfahren die Vorrichtung (100) nach einem der Ansprüche 1 bis 9 verwendet.

14. Verfahren (100) nach einem der Ansprüche 10 bis 13, **dadurch gekennzeichnet, dass** die Partikel in der Gasphase gemessen werden und/oder dass die Partikel während der Separation und/oder der Verdünnung und/oder der Dispergierung und/oder der Messung in einem Gasstrom gehalten, bevorzugt durchgängig in einem Gasstrom gehalten werden.

15. Verfahren (100) nach einem der Ansprüche 10 bis 14, **dadurch gekennzeichnet, dass** die Partikel direkt gemessen werden.

## Claims

1. Device (100) for continuous measurement of particles in a corrosive and/or very hot gas stream (102), wherein means (122) for measuring the particles are present, **characterized in that** the device comprises phase separation means (112), which comprise mechanical and/or electrical separators for separating the particles from the gas stream (102), wherein means are present for dispersing the separated particles in air which is not in direct connection with the gas stream (102) and has no corrosive constituents, so that the means for measuring do not come into contact with the corrosive and/or very hot gas stream (102), but only with the separated particles to be measured.

2. Device (100) according to claim 1, **characterized in that** the phase separation means (112) comprise a centrifugal separator and/or an electric separator.

3. Device (100) according to claim 1 or 2, **characterized in that** means for diluting separated particles are present, wherein the dilution means are preferably adapted to perform dilution with ambient air and/or technical air.

4. Device (100) according to any of the preceding claims, **characterized in that** the dispersion means are present in a gas to produce an aerosol (120) of the separated particles.

5. Device (100) according to any of the preceding claims, **characterized in that** the measuring means (122) are adapted to measure particles in the gas phase.

6. Device (100) according to any of the preceding claims, **characterized in that** the device (100) is adapted to maintain the particles in a gas stream during separation and/or dilution and/or dispersion and/or measurement, preferably to maintain the particles continuously in a gas stream.

7. Device (100) according to any of the preceding claims, **characterized in that** the device (100) is adapted to measure particles directly.

8. Device (100) according to any of the preceding claims, **characterized in that** the measuring means (122) comprise a sensor which is not corrosion-resistant and/or temperature-resistant.

9. Device (100) according to any of the preceding claims, **characterized in that** the measurement means (122) comprise an optical sensor, preferably based on a scattered light measurement.

10. Method for continuous measurement of particles in a corrosive and/or hot gas stream (102), **characterized in that** the particles are separated from the gas stream (102), wherein the separation is effected by mechanical and/or electrical separation (112), and the separated particles are measured, wherein the separated particles are dispersed in air, which is not in direct contact with the gas stream (102) and has no corrosive constituents, so that the means for measuring for continuous measurement of the separated particles do not come into contact with the corrosive and/or very hot gas stream (102), but only with the separated particles to be measured.

11. Method according to claim 10, **characterized in that** centrifugal separation and/or electrical separation are used for separation by mechanical and/or electrical separation (112).

12. Method according to claim 10 or 11, **characterized in that** the separated particles are diluted and/or an aerosol (120) is formed from the separated particles.

13. Method according to any one of claims 10 to 12, **characterized in that** the method uses the device (100) according to any one of claims 1 to 9.

14. Method (100) according to any one of claims 10 to 13, **characterized in that** the particles are measured in the gas phase, and/or that the particles are maintained in a gas stream during separation and/or dilution and/or dispersion and/or measurement, preferably are maintained continuously in a gas stream.

15. Method (100) according to any one of claims 10 to 14, **characterized in that** the particles are measured directly.

## Revendications

1. Dispositif (100) de mesure continue de particules dans un flux de gaz (102) corrosif et/ou très chaud, dans lequel sont présents des moyens (122) de mesure des particules, **caractérisé en ce que** le dispositif comprend des moyens (112) de séparation de phases, qui comprennent des séparateurs mécaniques et/ou électriques pour séparer les particules du flux de gaz (102), dans lequel sont présents des moyens de dispersion des particules séparées dans l'air, qui n'est pas en lien direct avec le flux de gaz (102) et ne présente aucun constituant corrosif de sorte que les moyens de mesure ne parviennent pas en contact avec le flux de gaz (102) corrosif et/ou très chaud, mais seulement avec les particules séparées à mesurer.

2. Dispositif (100) selon la revendication 1, **caractérisé en ce que** les moyens (112) de séparation de phases comprennent un séparateur centrifuge et/ou un séparateur électrique.

3. Dispositif (100) selon la revendication 1 ou 2, **caractérisé en ce que** sont présents des moyens pour diluer des particules séparées, dans lequel les moyens de dilution sont adaptés de manière préférée pour réaliser une dilution avec de l'air ambiant et/ou un air technique.

4. Dispositif (100) selon l'une quelconque des revendications précédentes, **caractérisé en ce que** les moyens de dispersion sont présents dans un gaz pour produire un aérosol (120) des particules séparées.

5. Dispositif (100) selon l'une quelconque des revendications précédentes, **caractérisé en ce que** les moyens (122) de mesure sont adaptés pour mesurer les particules dans la phase gazeuse.

6. Dispositif (100) selon l'une quelconque des revendications précédentes, **caractérisé en ce que** le dispositif (100) est adapté pour maintenir les particules dans un flux de gaz pendant la séparation et/ou la dilution et/ou la dispersion et/ou la mesure, de manière préférée pour maintenir les particules en continu dans un flux de gaz.

7. Dispositif (100) selon l'une quelconque des revendications précédentes, **caractérisé en ce que** le dispositif (100) est adapté pour mesurer directement les particules.

8. Dispositif (100) selon l'une quelconque des revendications précédentes, **caractérisé en ce que** les moyens (122) de mesure comprennent un capteur ne résistant pas à la corrosion et/ou ne résistant pas aux températures.

9. Dispositif (100) selon l'une quelconque des revendications précédentes, **caractérisé en ce que** les moyens (122) de mesure comprennent un capteur optique, de manière préférée se basant sur une mesure de lumière diffusée.

10. Procédé de mesure en continu de particules dans un flux de gaz (102) corrosif et/ou très chaud, **caractérisé en ce que** les particules sont séparées du flux de gaz (102), dans lequel la séparation est effectuée par une séparation mécanique et/ou électrique (112), et les particules séparées sont mesurées, dans lequel les particules séparées sont dispersées dans l'air, qui n'est pas en lien direct avec le flux de gaz (102) et ne présente aucun constituant corrosif, de sorte que les moyens de mesure se destinant à la mesure continue des particules séparées ne parviennent pas en contact avec le flux de gaz (102) corrosif et/ou très chaud, mais seulement avec les particules séparées à mesurer.

11. Procédé selon la revendication 10, **caractérisé en ce qu'**une séparation centrifuge et/ou une séparation électrique sont utilisées pour la séparation par une séparation (112) mécanique et/ou électrique.

12. Procédé selon la revendication 10 ou 11, **caractérisé en ce que** les particules séparées sont diluées, et/ou qu'un aérosol (120) est formé à partir des particules séparées.

13. Procédé selon l'une quelconque des revendications 10 à 12, **caractérisé en ce que** le procédé utilise le dispositif (100) selon l'une quelconque des revendications 1 à 9.

14. Procédé (100) selon l'une quelconque des revendications 10 à 13, **caractérisé en ce que** les particules sont mesurées dans la phase gazeuse, et/ou que les particules sont maintenues dans un flux de gaz pendant la séparation et/ou la dilution et/ou la dispersion et/ou la mesure, de manière préférée sont maintenues en continu dans un flux de gaz.

15. Procédé (100) selon l'une quelconque des revendications 10 à 14, **caractérisé en ce que** les particules sont directement mesurées.
